# EUROPEAN PATENT APPLICATION

(11) **EP 0 875 710 A1**
(43) Date of publication of application: **04.11.1998**
(21) Application number: 98106674.9
(22) Date of filing: 11.04.1998
(51) Int. Cl.: F16L 33/213, F16L 58/18, F16L 23/12, F16L 21/02, F16L 55/162

(54) **An end termination for pipes**

(30) Priority: 30.04.1997 NO 972019
(71) Applicant: Kristian Olimb AS, 1640 Rade (NO)
(72) Inventor: Dalby, Rolf, 1628 Engelsviken (NO)
(74) Representative: Haimelin, Jukka Ilmari

(57) **Abstract**

An end termination for a pipe, which is particularly suited for lining pipes (2) for existing water and sewage pipelines (1) comprises a coupling member (9), which is fixed with respect to the pipe (2) by means of a fastening sleeve (4) having a cylindrical portion (5), which is introduced into the pipe (2) and expanded to friction locking contact therewith by means of an expanding sleeve (10) arranged inside the fastening sleeve (4). The fastening sleeve is provided with seals in the form of swellable rubber (7) and O-rings (8).

## Description

The present invention relates to an end termination for a pipe as recited in the introductory part of claim 1, and a method for placing a coupling member at the end of a lining pipe as recited in the introductory part of claim 9.

The present invention is particularly, but not exclusively, suited for rehabilitating pipelines for water and sewage. Older pipelines of this type have a limited lifetime, the result being that leakages will occur to polute and erode the surroundings. For instance, it has been shown that in some cities the water mains network is in such a poor condition that the leakage from the network is about as large as the amount of water reaching the consumers. To replace such a pipeline network by excavating the old pipelines and laying new ones is very costly, and various methods have therefore been developed for rehabilitating existing pipes in order to avoid or substantially limit the excavation work.

A rehabilitation method of this kind which has proven very effective is the so-called Insituform® method. This method entails inserting a tube of various textile materials soaked with liquid epoxy or polyester into the pipeline, whereupon the tube is dilated against the inner wall of the existing pipe and the epoxy or polyester is brought to cure by circulating warm water through the tube. By selecting a suitable textile structure for the tube, the lining tube formed thereby upon the curing can be made strong enough to withstand the internal pressure loads as well as the external mechanical loads to which a water pipeline may be subjected.

A pipe rehabilitated in this way must at the ends, e.g. in manholes, be provided with coupling members in order to permit the connection of valves or other connecting means.

Hitherto this has been done by cutting the lining pipe flush with the end of the existing pipe and placing a flanged muff on the existing pipe and clamping it thereon. In order to seal between the flanged muff and the internal lining pipe, glass fibre reinforced polyester or epoxy has been placed against the flange of the muff and about 20 cm into the lining pipe. Thereafter, a ring flange have been placed against the plastic on the flange of the muff in order to provide a sufficiently even end termination.

This way of making the end termination is cumbersome and time consuming, i.a. because it necessitates access to a certain minium length of the existing pipe and sufficient room therearound in order to permit the installation of the flanged muff. This may necessitate excavation and intervention in the wall of the manhole. In addition, the method requires that the glass fibre reinforced polyester or epoxy which is introduced into the lining pipe obtains sufficient adhesion to the inner surface of the pipe. This excludes the use of certain otherwise very suitable materials, for instance PE, for the innermost layer of the lining pipe.

The present invention aims at providing an end termination of the type defined in the introductory paragraph, which is not subjected to the drawbacks and deficiencies mentioned above. This is obtained according to the invention as recited in the characterizing part of claim 1. Further advantageous features of the invention are recited in the dependent claims 2 to 8.

The invention also relates to a method for placing a coupling member at the end of a lining pipe as defined in claims 9 and 10.

For the better understanding of the invention, it will be described more closely with reference to an examplifying embodiment shown in the appended drawings, where:
Fig. 1 schematically shows a side view of a pipe end and the elements of an end termination according to the invention in separated condition, and
Fig. 2 shows a longitudinal section through the parts of Fig. 1 in installed condition.

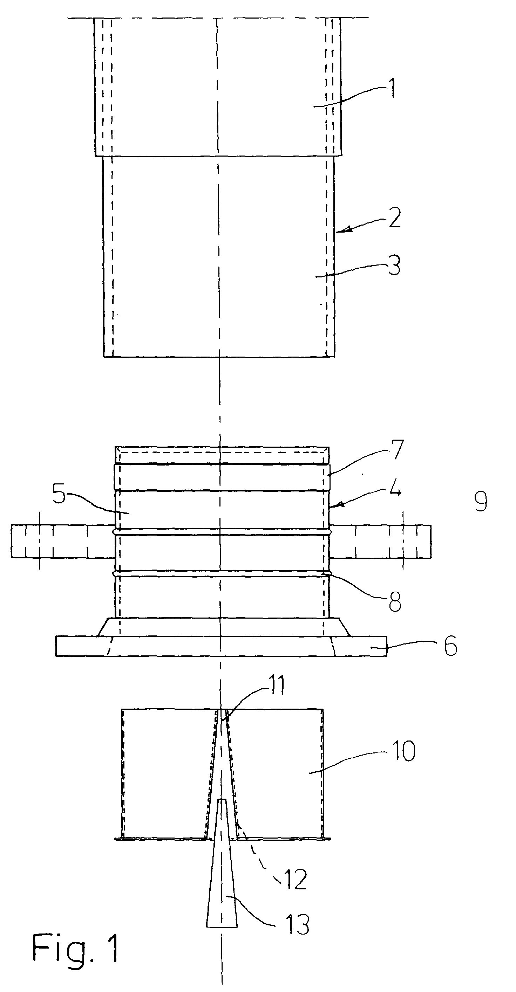

At the top, Fig. 1 shows an end of an existing pipe 1 which has been rehabilitated by means of a lining pipe 2, the end portion 3 of which extends somewhat from the existing pipe 1.

Below the pipes 1, 2 there is shown a fastening sleeve 4, having a straight cylindrical portion 5 and a collar 6 at an end thereof. The cylindrical portion 5 is provided with three external grooves, one for a flat gasket 7, preferably consisting of swellable rubber, and the remaining two for common O-rings 8. A loose flange 9 is placed onto the cylindrical portion 5 of the fastening sleeve 4. The fastening sleeve may be made of a plastic material, preferably polyethylene.

At the bottom Fig. 1 shows an expanding sleeve 10, which has substantially circular cylindrical form but is provided with a wedge-shaped slot 11. The edges of the slot are provided with guides 12 for a wedge 13 having generally the same wedge angle as the slot 11. The wedge is made of the same plate material as the sleeve 10, preferably stainless steel. It will be understood that when the wedge 13 is driven into the slot 11, it will tend to increase the diameter of the sleeve 10 and will thus be able to exert a substantial distending force.

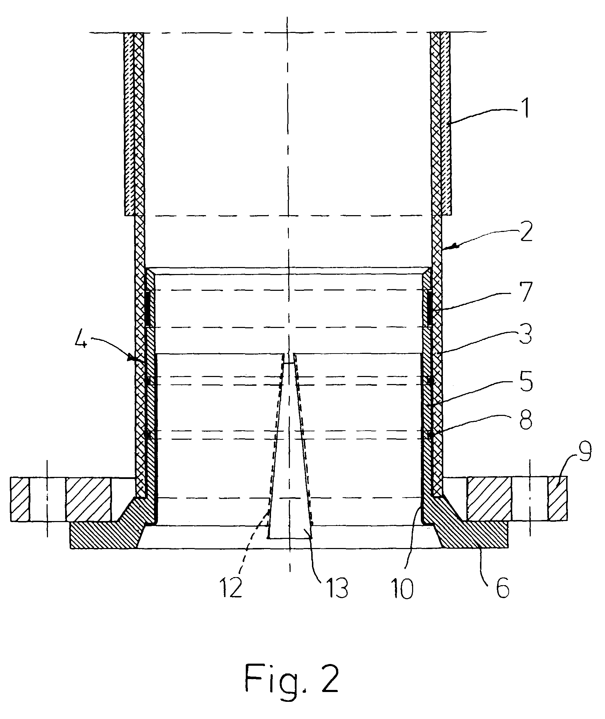

Fig. 2 shows how the cylindrical portion 5 of the fastening sleeve 4 is introduced into the end portion 3 of the lining pipe 2, which e.g. may be made by means of the Insituform® method mentioned above, so that it has sufficient strength to absorb the loads it could be subjected to due to internal pressure and loads transferred from equipment connected via the flange 9.

In order to fix the cylindrical portion 5 of the fastening sleeve 4 in the lining pipe 2, the expanding sleeve 10, without the wedge 13, is introduced into the cylindrical portion 5 as far as it can go. Thereafter, the wedge 13 is driven into the slot 11 so that the sleeve 10 expands the cylindrical portion 5 of the festening sleeve into friction locking contact with the inner wall of the lining pipe. The fastening sleeve is now anchored in the lining pipe, so that equipment like valves, branching pipes and the like can be connected to the rehabilitated pipe via the loose flange 9.

When the rehabilitated pipe is put in service and water gets to the flat gasket 7 of swellable rubber, the swellable rubber will expand and increase the frictional contact between the lining pipe 2 and the fastening sleeve 4. If the water pressure becomes so high that water penetrates past the swellable rubber, the O-rings 8 will prevent further leakage.

It will be understood that the length of the end portion 3 of the lining pipe 2 can be adapted to the equipment to be connected to the flange 9 and the space available, for instance in a manhole.

Furthermore, it will be understood that the invention is not limited to the examplifying embodiment shown, but may be varied and modified in a number of ways within the scope of the appended claims. Thus, the fastening sleeve 4 need not be provided with a collar 6 in order to hold the loose flange 9 in place, but may e.g. itself have a flange forming an integral part, or being provided with a coupling member in the form of a threaded portion. The length of the expanding sleeve 10 need not constitute about 2/3 of the length of the fastening sleeve 4, but may e.g. extend all the way to the inner end of the fastening sleeve. Also, it is possible to adapt the shape of the slot 11 and the wedge 13 in such a way that the distending action of the sleeve 10 varies somewhat in its longitudinal direction.

## Claims

1. An end termination for a pipe, comprising a coupling member (9) which is associated with a fastening sleeve (4), which is overlapping with a end portion (3) of the pipe (2) and is deformed into contact therewith, **characterized** in that the fastening sleeve (4) is situated at least partly on the inside of the end portion (3) of the pipe and is forced radially into contact with said end portion (3) by means of an expanding sleeve (10) arranged on the inside of the fastening sleeve (4).

2. An end termination according to claims 1, **characterized** in that on the fastening sleeve (4) there is placed a flat gasket (7), preferably of swellable rubber, near the inner end of the fastening sleeve (4) and preferably two O-rings (8) externally thereof (7).

3. An end termination according to claim 1 or 2, **characterized** in that the coupling member is a flange (9).

4. An end termination according to claim 1, 2 or 3, **characterized** in that the pipe is a lining pipe (2) for rehabilitating existing water or sewage pipelines (1).

5. An end termination according to a preceding claim, **characterized** in that the length of the expanding sleeve (10) is about 2/3 of the length of the fastening sleeve (4).

6. An end termination according to claims 2 and 5, **characterized** in that the expanding sleeve (10) ends between the flat gasket (7) and (the innermost) O-ring (8).

7. An end termination according to a preceding claim, **characterized** in that the fastening sleeve (4) is made of a plastic material, preferably PE.

8. An end termination according to a preceding claim, **characterized** in that said end portion (3) of the lining pipe (2) extends outside the end of said existing pipeline (1).

9. A method for placing a coupling member (9) on an end portion (3) of a lining pipe (2) placed in an existing pipeline (1) for rehabilitation thereof, where a fastening sleeve (4, 5) provided with a coupling member (9) is brought to overlap with an end portion of the lining pipe (2) and is deformed radially with respect thereto, **characterized** in that the fastening sleeve (4, 5) is introduced into the end portion (3) of the lining pipe (2) and is distended into contact with the inner wall of the end portion (3) by means of an expanding sleeve (10) introduced into the fastening sleeve (4, 5).

10. A method according to claim 9, **characterized** in that the expanding sleeve (10) is expanded by driving a wedge (13) into a slightly V-shaped slot (11) in the wall of the expanding sleeve (10).
